# FASCICULE DE BREVET EUROPEEN

(11) **EP 1 176 504 B1**
(45) Date de publication et mention de la délivrance du brevet: **29.09.2004**
(21) Numéro de dépôt: 01402013.5
(22) Date de dépôt: 26.07.2001
(51) Int. Cl.: G06F 9/318, G06F 9/38

(54) **Procédé de mémorisation comprimée d'un programme**
Verfahren zur Komprimierten Programmspeicherung
Compressed programme storage method

(30) Priorité: 28.07.2000 FR 0009909
(43) Date de publication de la demande: 30.01.2002
(73) Titulaire: CSEM Centre Suisse d'Electronique et de Microtechnique S.A. - Recherche et Développement, 2007 Neuchâtel (CH)
(72) Inventeur: Piguet, Christian, 2000 Neuchatel (CH); Masgonty, Jean-Marc, 2074 Marin (CH)
(74) Mandataire: Caron, Gérard

(56) Documents cités:
- EP-A- 0 540 175
- US-A- 4 173 041
- US-A- 5 870 576
- US-A- 6 049 862

## Description

La présente invention est relative à un procédé de mémorisation comprimée d'un programme destiné à être exécuté par un ordinateur.

Dans la présente description, le terme "ordinateur" désigne tout type de processeur capable d'exécuter un programme informatique, y compris les microprocesseurs. Par ailleurs, dans l'ensemble de la description, on utilisera le mot "pointeur" pour désigner un groupe de bits "pointant" vers une instruction à exécuter. L'utilisation de pointeurs permet de ne ranger dans une mémoire que des instructions différentes, quand bien même ces instructions sont utilisées plusieurs fois par le programme. L'ensemble des instructions occupe ainsi moins de place en mémoire; c'est pourquoi on parle de programme "comprimé".

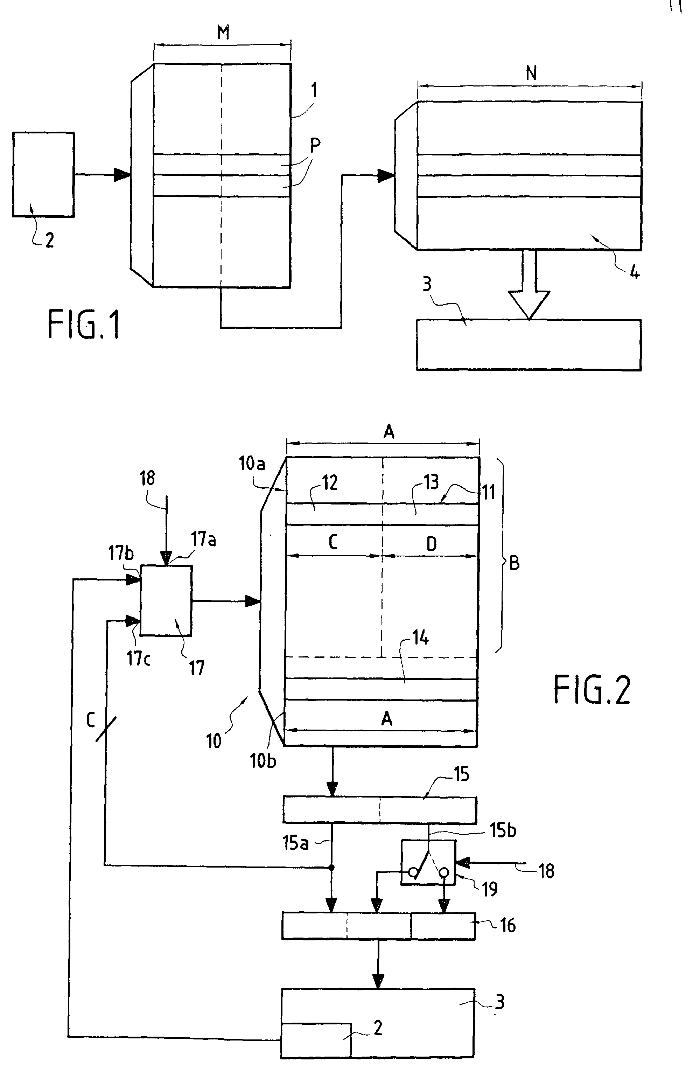

La figure 1 des dessins annexés représente l'un des procédés de mémorisation comprimée utilisés dans la technique antérieure.

Ce procédé met en oeuvre une mémoire 1 d'une largeur de M bits qui est adressée par un compteur de programme 2 faisant partie d'un processeur 3. La mémoire 1 contient des pointeurs P d'une largeur de M bits qui servent d'adresses pour une mémoire ou table d'instructions 4 d'une largeur de N bits. Les pointeurs de M bits sont plus courts que les instructions de N bits (M < N). La mémoire 4 contient toutes les instructions nécessaires au fonctionnement du processeur 3.

Ce procédé permet effectivement de réduire la taille totale de la mémoire 4, qui ne contient que des instructions différentes, mais il présente néanmoins plusieurs inconvénients.

Un premier de ces inconvénients tient aux possibilités limitées d'application de ce procédé à des circuits intégrés ayant des fonctionnalités différentes et devant, pour assurer celles-ci, être programmés différemment les uns des autres, tout en présentant une topographie identique ou semblable.

En effet, les mémoires 1 et 4 du circuit intégré (qui est le plus souvent une mémoire de type ROM) sont chargées pendant une étape ultime de la fabrication de la puce de circuit intégré, grâce à un masque à travers lequel certaines interconnexions de la mémoire sont sélectivement supprimées. Bien entendu, après cette étape, il n'est plus possible de modifier la programmation.

Par ailleurs, pour économiser de la place sur la puce, le concepteur du circuit intégré choisit la taille des mémoires juste assez grande pour qu'elles puissent contenir respectivement les pointeurs et les instructions du programme, mais pas plus.

Ainsi, lorsqu'une topographie donnée est arrêtée pour un circuit intégré et la taille de la mémoire en est fixée, ce circuit ne sera utilisable qu'avec un programme compatible avec cette taille; un programme ayant des nombres de pointeurs et/ou d'instructions plus grands ne pouvant pas y être chargé par manque d'emplacements de mémoire. Inversement, si le programme comporte moins de pointeurs et/ou d'instructions, on perdra des emplacements de mémoire, ce qui conduira à une utilisation moins efficace de la place disponible sur la puce.

Un autre inconvénient de la technique antérieure réside dans le fait qu'il faut deux mémoires auxquelles il faut associer les interconnexions nécessaires, ceci allant également au détriment d'une efficacité optimale de l'utilisation de la place disponible sur la puce.

L'invention a pour but de proposer un procédé de mémorisation comprimée d'un programme d'ordinateur qui ne présente pas les inconvénients de la technique antérieure examinée ci-dessus.

L'invention a donc pour objet un procédé de mémorisation comprimée d'un programme destiné à être exécuté par un ordinateur, caractérisé en ce qu'il consiste à ranger dans chacune des lignes d'une première zone d'une mémoire, un premier mot d'information composé d'au moins un pointeur et d'au moins un jeu de bits formant une partie (par exemple LSB) d'une instruction à exécuter dans ledit ordinateur, et à ranger dans chacune des lignes d'une seconde zone de ladite mémoire un second mot d'information de même largeur de bits que le premier mot d'information et formé des bits restants (par exemple MSB) d'au moins une instruction à exécuter dans ledit ordinateur, chaque pointeur de ladite première zone de mémoire servant à constituer l'adresse d'un second mot d'information dans ladite seconde zone de mémoire contenant la partie restante de ladite au moins une instruction à laquelle correspond ledit au moins un jeu de bits associé à ce pointeur dans le même premier mot.

Grâce à ces caractéristiques, les pointeurs et les instructions à exécuter par l'ordinateur peuvent être rangés dans une seule mémoire de largeur uniforme permettant d'éviter des interconnexions de mémoire.

En outre, l'invention permet en partant d'une même topographie de circuit intégré, de concevoir différents types d'ordinateurs ayant des mémoires ROM contenant des programmes différents et dans lesquelles la répartition des pointeurs et des instructions peut être différente d'un type d'ordinateur à l'autre. En effet, la frontière séparant les deux zones de mémoire peut être choisie au cours du stade de chargement de la mémoire ROM, en fonction du nombre d'instructions différentes que doit employer l'ordinateur.

L'invention a également pour objet un procédé d'extraction d'instructions chargées dans une mémoire par le procédé de mémorisation comprimée tel que défini ci-dessus, caractérisé en ce qu'il consiste, pour extraire chacune desdites instructions,
dans une première phase d'extraction:
- à extraire un premier mot d'information de ladite mémoire,
- à stocker provisoirement ledit jeu de bits;
et dans une seconde phase d'extraction:
- à adresser ladite mémoire à l'aide du pointeur contenu dans ledit premier mot d'information pour extraire de ladite mémoire ledit second mot d'information, et
- à concatener ledit jeu de bits provisoirement stocké avec ledit second mot d'information en tant que partie de ladite instruction.

Selon d'autres caractéristiques avantageuses de l'invention, ce procédé d'extraction consiste également:
à stocker une adresse correspondant à la frontière dans ladite mémoire entre lesdites première et seconde zones de celle-ci, et
pendant ladite seconde phase d'extraction:
- à additionner ledit pointeur extrait de ladite mémoire à ladite adresse de frontière pour former l'adresse d'extraction du second mot d'information, ladite adresse de frontière pouvant être égale à zéro.

D'autres caractéristiques et avantages de la présente invention apparaîtront au cours de la description qui va suivre, donnée uniquement à titre d'exemple et faite en se référant aux dessins annexés sur lesquels:
- la figure 1, déjà décrite, est un schéma d'un système de mémorisation comprimée illustrant une solution de la technique antérieure;
- les figures 2 et 3 illustrent les principes de la présente invention; et
- les figures 4 et 5 représentent deux modes de réalisation d'un système de mémorisation comprimée permettant de mettre en oeuvre le procédé selon l'invention.

La figure 2 illustre le principe d'un premier mode de réalisation d'un système de mémorisation comprimée d'un programme d'ordinateur permettant de mettre en oeuvre le procédé selon l'invention.

On reconnaît sur cette figure l'ordinateur 3 muni de son compteur de programme 2. Il est associé à une mémoire ROM unique 10 d'une largeur de A bits. Cette mémoire comprend une première zone de mémoire 10a dans laquelle est mémorisée une pluralité de mots d'information, l'un de ces mots étant désigné par la référence 11 sur la figure 2.

Cette première zone de mémoire 10a contient au maximum B lignes stockant chacune un mot d'information, le nombre de lignes B correspondant au nombre de pas de programme que le programme mémorisé peut contenir. Chaque mot d'information comprend un pointeur 12 d'une largeur de C bits qui sont les bits de plus grand poids, MSB du mot d'information 11, et un jeu de bits 13 au nombre de D qui sont les bits de plus faible poids LSB du mot d'information 11. Dans le présent exemple, ce jeu de bits 13 forme la partie LSB d'une instruction à exécuter par l'ordinateur 3.

La mémoire 10 comprend également une seconde zone 10b dans laquelle est rangée une pluralité de mots d'information 14 ayant la largeur A de la mémoire 10. Ainsi, chacune des lignes de cette seconde zone 10b contient, dans le présent exemple, les bits MSB d'une instruction à exécuter par l'ordinateur 3 au cours du déroulement du programme.

L'adresse d'une ligne de la seconde zone 10b,correspondant à la partie MSB d'une instruction, est déterminée par le pointeur 12 rangé dans la même ligne 11 de la première zone 10a que le jeu de bits 13 qui forme la partie LSB de cette même instruction.

La sortie de la mémoire 10 est connectée à un registre de transfert 15 d'une largeur de A bits, ce registre étant relié à son tour à un registre d'instructions 16 d'une largeur de A + D bits. La sortie de ce registre 16 est reliée à l'entrée d'instructions de l'ordinateur 3.

L'adressage de la mémoire 10 est effectué par l'intermédiaire d'un multiplexeur 17 dont le choix des entrées est commandé par un signal de commande 18 qui lui est appliqué sur une entrée de commande 17a. Une première entrée de bits d'adresse 17b de ce multiplexeur est reliée au compteur de programme 2, tandis qu'une deuxième entrée de bits d'adresse 17c est connectée aux sorties MSB 15a, s'étalant sur C bits, du registre 15. Les sorties LSB 15b, s'étalant sur D bits, du registre 15 sont connectées, via un démultiplexeur 19 commandé par le signal 18, soit aux D positions LSB du registre d'instruction 16 soit aux positions correspondant aux D bits de plus faible poids de la partie MSB de l'instruction.

L'extraction du programme stocké dans la mémoire 10 se fait ainsi en deux phases qui sont commandées et rythmées par le signal 18, ce dernier pouvant être dérivé de l'horloge de l'ordinateur 3.

Au cours d'une première de ces phases, le multiplexeur 17 est transparent pour l'adresse provenant du compteur de programme 2. Cette adresse correspond à un mot d'information 11 de la zone 10a de la mémoire 10. Ce mot est extrait de la mémoire 10 et introduit dans le registre de transfert 15. Celui-ci contient alors le pointeur 12 et le jeu de bits LSB 13 du mot 11 désigné par l'adresse. Le jeu de bits 13 est directement transféré du registre de transfert 15 vars le registre d'instructions 16.

Au cours d'une seconde phase, le multiplexeur 17 devient transparent pour son entrée 17c sous l'action du signal de commande 18 de sorte que le pointeur 12 va être utilisé pour constituer l'adresse à appliquer à la mémoire 10. Cette adresse présente une valeur permettant de désigner un mot d'information 14 dans la zone de mémoire 10b. Ce mot d'information d'une largeur A est introduit en totalité dans la partie MSB du registre 16, les emplacements LSB du registre 15 passant par la sortie 15 et le démultiplexeur 19 vers la partie MSB de ce registre. Pour cela, le démultiplexeur 19 est placé dans la configuration appropriée par le signal de commande 18.

Par conséquent, les deux phases d'extraction étant achevées, le registre 16 contient les bits du mot d'information A concatené aux D bits du jeu de bits LSB 13. L'ordinateur reçoit ainsi une instruction d'une longueur A + D.

Si, à titre d'exemple, l'ordinateur 3 travaille avec des instructions d'une longueur de 22 bits, les nombres A, C et D peuvent respectivement prendre les valeurs 15, 8 et 7. Bien entendu, d'autres valeurs peuvent être envisagées.

Il est à noter que l'on peut choisir d'adjoindre aux pointeurs stockés dans la zone 10a de la mémoire d'autres bits d'instruction que les bits LSB du mot 11. Ils peuvent correspondre à n'importe quelle partie d'instruction, voire être constitués d'un mélange de bits de type MSB et de type LSB. Dans ce cas, le circuit 19 devra être à même de replacer ces bits aux emplacements corrects dans le registre 16.

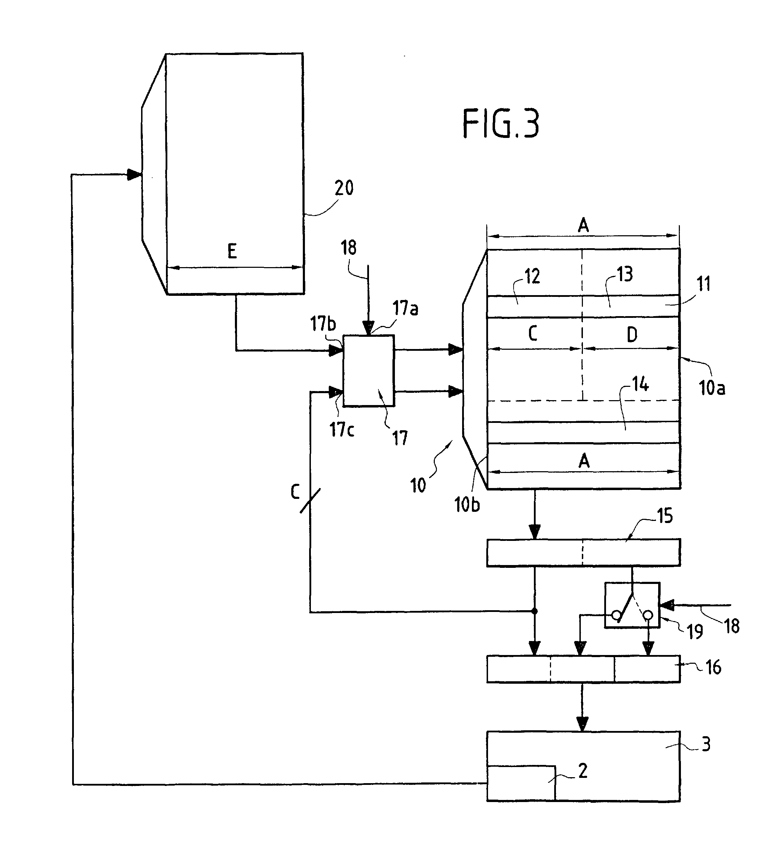

La figure 3 illustre un deuxième principe de réalisation de l'invention dans lequel on utilise le même agencement de la mémoire 10 et l'extraction des instructions pour l'ordinateur 3 se fait de la même façon que décrit ci-dessus. Cependant, dans ce cas, pour obtenir une compression supplémentaire, la zone 10a de la mémoire est adressée à partir d'une mémoire de pointeurs 20 connectée entre le compteur de programme 2 et l'entrée 17b du multiplexeur 17. La mémoire de pointeurs 20 présente une largeur de E bits, 10 par exemple. Selon ce principe de réalisation, on réunit dans un même agencement ceux des figures 1 et 2. La conception de ce système est donc un compromis entre la recherche d'une réduction maximale de bits à mémoriser et d'une économie maximale de place sur la puce. En effet, on voit que ce système nécessite la mémoire supplémentaire 20 dont la largeur est inférieure à celle de la mémoire principale.

Dans la description des figures 2 et 3, on a considéré que les bits des pointeurs constituaient la totalité d'une adresse de la mémoire 10. En fait, ils n'en constituent que la partie qui peut changer et il est nécessaire d'adjoindre à ces pointeurs des bits supplémentaires pour constituer une adresse complète. Les figures suivantes montrent des exemples d'implémentation.

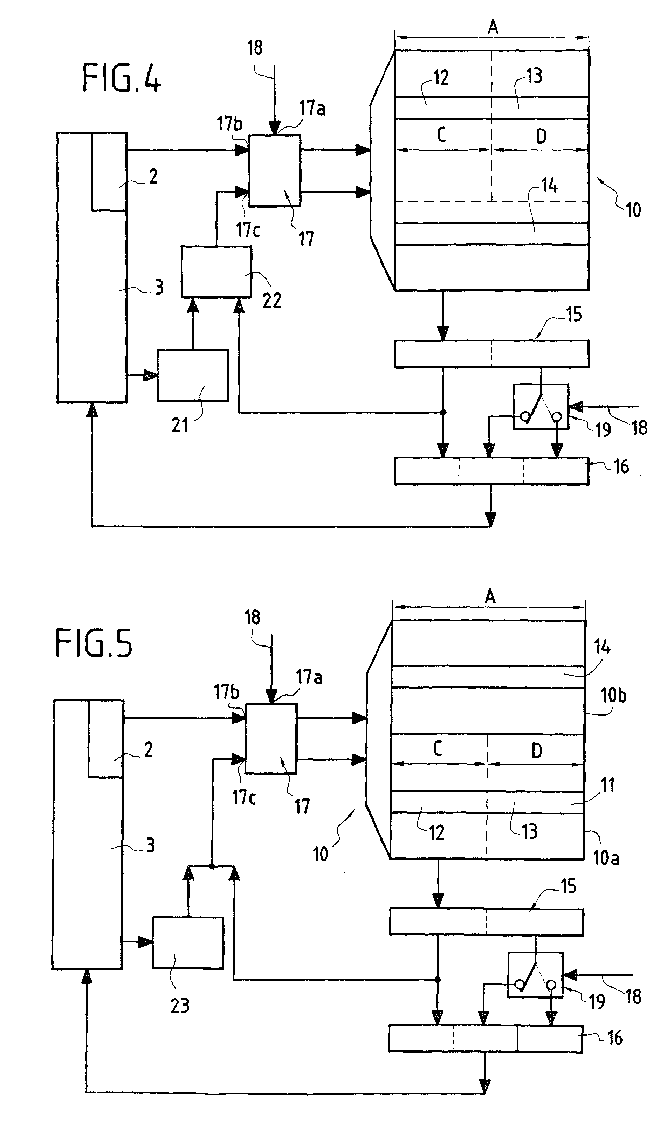

Selon le mode de réalisation de la figure 4, la "frontière" entre les zones 10a et 10b de la mémoire 10 est déterminé par le programme. A cet effet, le système de mémorisation comprimée comprend également un registre 21 dans lequel est mémorisé en permanence un nombre qui correspond à l'adresse de cette frontière. Ce registre est chargé à partir de l'ordinateur 3 et son contenu est ajouté dans un additionneur 22 à la valeur du pointeur 12 extrait de la mémoire 10 pendant la première phase du processus d'extraction. Pendant la deuxième phase de ce processus, l'adresse de la zone 10b est alors formée par la somme du pointeur 12 et du nombre qui se trouve dans le registre 21 et comprend le nombre de bits d'adresse nécessaire, ledit nombre étant supérieur au nombre de bits des pointeurs.

La figure 5 représente une variante de la figure 4 dans laquelle les emplacements des zones 10a et 10b sont inversés. Dans ce cas, le compteur de programme 2 doit commencer l'exécution du programme en commençant par l'adresse du premier mot d'information 11 de la zone 10a. Ce système comprend un registre 23 dans lequel est inscrite la valeur 0. Pour, au cours de la seconde phase du processus d'extraction, pouvoir trouver le mot 14 correspondant au mot d'information correspondant, il convient alors de concatener le pointeur introduit dans le registre de transfert 15 avec le contenu du registre 23.

D'autres formes de réalisation que celles décrites précédemment, peuvent également utiliser les principes de l'invention. Ainsi peut-on imaginer que la mémoire est organisée pour contenir, dans une première zone, des mots comprenant plus d'un pointeurs et/ou des parties de plus d'une instruction et, dans une deuxième zone, des mots comprenant les compléments de plus d'une instruction. La logique d'extraction doit être adaptée en conséquence, le nombre de cycles de lecture nécessaire pouvant alors être supérieur à deux.

## Revendications

1. Procédé de mémorisation comprimée d'un programme destiné à être exécuté par un ordinateur (3), **caractérisé en ce qu'**il consiste à ranger dans chacune des lignes d'une première zone (10a) d'une mémoire (10), un premier mot d'information (11) composé d'au moins un pointeur (12) et d'au moins un jeu de bits (13) formant une partie d'une instruction à exécuter dans ledit ordinateur (3), et à ranger dans chacune des lignes d'une seconde zone (10b) de ladite mémoire (10) un second mot d'information (14) de même largeur de bits que le premier mot d'information (11) et formé des bits restants d'au moins une instruction à exécuter dans ledit ordinateur, chaque pointeur (12) de ladite première zone de mémoire (10a) servant à constituer l'adresse d'un second mot d'information (14) dans ladite seconde zone de mémoire (10b) contenant la partie restante de ladite au moins une instruction à laquelle correspond ledit au moins un jeu de bits (13) associé à ce pointeur (12) dans le même premier mot (11).

2. Procédé d'extraction d'instructions chargées dans une mémoire par le procédé conforme à la revendication 1, **caractérisé en ce qu'**il consiste, pour extraire chacune desdites instructions,
dans une première phase d'extraction:
- à extraire un premier mot d'information (11) de ladite première zone (10a) à l' aide d'un compteur de programme (2),
- à stocker provisoirement ledit jeu de bits (13);
et dans une seconde phase d'extraction:
- à adresser ladite mémoire (10) à l'aide du pointeur (12) contenu dans ledit premier mot d'information (11) pour extraire de ladite seconde zone (10b) ledit second mot d'information (14), et
- à concatener ledit jeu de bits provisoirement stocké (13) avec ledit second mot d'information (14) en tant que partie de ladite instruction.

3. Procédé d'extraction selon la revendication 2, **caractérisé en ce qu'**il consiste également:
à stocker une adresse correspondant à la frontière dans ladite mémoire (10) entre lesdites première et seconde zones (10a et 10b) de celle-ci, et
pendant ladite seconde phase d'extraction:
- à additionner ledit pointeur (12) extrait de ladite mémoire à ladite adresse de frontière pour former l'adresse d'extraction du second mot d'information (14).

4. Procédé d'extraction suivant la revendication 3, **caractérisé en ce que** l'adresse de frontière est égale à zéro.

## Patentansprüche

1. Verfahren zum komprimierten Speichern eines von einem Rechner (3) auszuführenden Programms, **dadurch gekennzeichnet, dass** es darin besteht, in jeder Zeile eines ersten Bereichs (10a) eines Speichers (10) ein erstes Informationswort (11) anzuordnen, das aus mindestens einem Zeiger (12) und mindestens einer Bitgruppe (13) besteht, welche einen Teil eines in dem Rechner (3) auszuführenden Befehls bildet, und in jeder Zeile eines zweiten Bereiches (10b) des Speichers (10) ein zweites Informationswort (14) anzuordnen, das die gleiche Bitbreite wie das erste Informationswort (11) hat und aus restlichen Bits mindestens eines in dem Rechner auszuführenden Befehls gebildet ist, wobei jeder Zeiger (12) des ersten Speicherbereichs (10a) dazu dient, die Adresse eines zweiten Inforrnationswortes (14) in dem zweiten Speicherbereich (10b) zu bilden, der den restlichen Teil des besagten mindestens einen Befehls enthält, welchem die besagte mindestens eine Bitgruppe (13) entspricht, die diesem Zeiger (12) in dem selben ersten Informationswort (11) zugeordnet ist.

2. Verfahren zum Auslesen von Befehlen, die in einen Speicher durch das Verfahren gemäß dem Anspruch 1 eingegeben wurden, **dadurch gekennzeichnet, dass** es zum Auslesen jeder der Befehle darin besteht,
in einer ersten Auslesephase:
ein erstes Informationswort (11) des ersten Bereiches (10a) mit Hilfe eines Programmzählers (2) auszulesen,
die Bitgruppe (13) vorläufig zu speichern;
und in einer zweiten Auslesephase:
den Speicher (10) mit Hilfe des in dem ersten Informationswort (11) enthaltenen Zeigers (12) zu adressieren, um aus dem zweiten Bereich (10b) das zweite Informationswort (14) auszulesen, und
die vorläufig gespeicherte Bitgruppe (13) mit dem zweiten Informationswort (14) als Teil des Befehls zu verketten.

3. Verfahren zum Auslesen nach Anspruch 2, **dadurch gekennzeichnet, dass** es ferner darin besteht:
eine Adresse entsprechend der Grenze in dem Speicher (10) zwischen dem ersten und zweiten Bereich (10a und 10b) desselben zu speichern und
während der zweiten Auslesephase:
den aus dem Speicher ausgelesenen Zeiger (12) zu der Adresse der Grenze zu addieren, um die Auslesadresse des zweiten Informationswortes (14) zu bilden.

4. Verfahren zum Auslesen nach Anspruch 3, **dadurch gekennzeichnet, dass** die Adresse der Grenze gleich Null ist.

## Claims

1. A method of storing in a compressed form a program intended to be executed by a computer (3), **characterized in that** it consists in storing in each of the rows of a first region (10a) of a memory (10) a first information word (11) comprising at least one pointer (12) and at least one set of bits (13) forming a portion of an instruction to be executed in said computer (3), and storing in each of the rows of a second region (10b) of said memory (10) a second information word (14) with the same number of bits as the first information word (11) and formed of the remaining bits of at least one instruction to be executed in said computer, each pointer (12) of said first memory region (10a) serving to constitute the address of a second information word (14) in said second memory region (10b) containing the remaining portion of said at least one instruction to which corresponds said at least one set of bits (13) associated with said pointer (12) in the same first word (11).

2. A method of extracting instructions loaded into a memory by the method conforming to claim 1, **characterized in that**, for extracting each of said instructions, it consists in,
in a first extraction phase:
- extracting a first information word (11) from said first region (10a) with the aid of a program counter (2),
- temporarily storing said set of bits (13);
and in a second extraction phase:
- addressing said memory (10) using the pointer (12) contained in said first information word (11) to extract from said second region (10b) said second information word (14), and
- concatenating said temporarily stored set of bits (13) with said second information word (14) as a portion of said instruction.

3. An extraction method according to claim 2, **characterized in that** it also consists in:
storing an address corresponding to the boundary in said memory (10) between said first and second regions (10a and 10b) thereof, and
during said second extraction phase:
- adding said pointer (12) extracted from said memory to said boundary address to form the extraction address of the second information word (14).

4. An extraction method according to claim 3, **characterized in that** the boundary address is equal to zero.
